# NEW EUROPEAN PATENT SPECIFICATION

(11) **EP 0 507 757 B2**
(45) Date of publication and mention of the opposition decision: **21.10.1998**
(45) Mention of the grant of the patent: 20.03.1996
(21) Application number: 92850072.7
(22) Date of filing: 02.04.1992
(51) Int. Cl.: B60S 3/04

(54) **Method for automatic washing of motor vehicles, and automatic device for the execution thereof**
Verfahren zum automatischen Waschen von Kraftfahrzeugen sowie automatische Vorrichtung zur Durchführung des Verfahrens
Procédé de lavage automatique pour véhicules automobiles et dispositif automatique pour l'exécution du procédé

(30) Priority: 02.04.1991 NO 911280
(43) Date of publication of application: 07.10.1992
(73) Proprietor: NOWAC INDUSTRIER a.s., N-2013 Skjetten (NO)
(72) Inventor: Ingebrigtsen, Arild, N-2044 Frogner (NO)
(74) Representative: Platt, Timothy Nathaniel

(56) References cited:
- EP-A- 283 446
- EP-A- 0 302 964
- EP-A- 0 379 353
- DE-A- 3 208 527
- DE-A- 3 831 155
- DE-A- 3 914 438
- Bedienungsanleitung, Zeichnung und Liste von "MB-Waschanlage bzw. Waschstrasse R19700"

## Description

The invention relates to an automatic vehicle washing device and a method of automatcally washing a vehicle in a washing area of a washing device, as defined in the preamble of claims 1 and 2.

In the generally known automatic washing systems for vehicles of almost any kind, it is necessary to control the various pieces of equipment, such as spray nozzles or drying fans, in such a way that they conform with the contour or profile of the vehicle. In order to make this possible, the vehicle must be scanned and the signals obtained thereby must be converted to control signals for the driving mechanism of the equipment. In known systems, mechanical scanning usually takes place by means of rollers which come into contact with the body of the vehicle. Such mechanical sensors register the contour only at the points of contact and this results in a relatively large distance between the equipment and the vehicle.

However, the control of the equipment at one or several work stations, in particular fans, brushes and nozzles, or similar, in an automatic car wash system is known. Thus, a system is known wherein the work stations and the vehicle are moved in relation to one another and wherein a non-contacting sensor system is used to sense or scan the contour of the vehicle. The sensing system comprises a number of transmitters and receivers consisting of beam bars. These bars are broken by the vehicle and the receivers relay start signals via a coupling device to a driving mechanism for positioning the equipment.

In such a known washing system, e.g. the system known from DE-A-30 05 493, the sensor system in the workstation is connected to the equipment and is moved with this. The interruption of the beams causes a control of the equipment in the respective position to be assumed. Experience has shown that a system of this kind is easily disturbed in its function owing to the presence of dirt and water particles.

To avoid the disadvantages which such disturbing environmental factors, as for instance dirt, dust and/or moisture, cause and which it cannot be hoped to avoid finding in a washing system or device for vehicles, a sensor system is proposed in DE-C-32 08 527 which is in the form of several, and at least one row of monitored beam bars arranged above and serially coupled to another and transverse to the relative direction of movement for the vehicle and the respective pieces of equipment. The measurements thus obtained by sensing, which are typical for the position of the individual contour points, go into a memory and the measurements are used for controlling the equipment so that it is positioned relative to the vehicle.

Only one scan is carried out, even though there may be a plurality of successive work stations, and the scan is carried out at the start of the system, i.e. an area where there are no disturbing elements. Thus only one scanning means is needed, which is positioned in an area outside the zone where dirt and water particles are thrown into space from the various kinds of nozzles, brushes and fans. The contour of the vehicle is stored during the scanning and this stored content is transferred thus to its respective work station when the vehicle reaches it, and is used to control the movement of the respective pieces of equipment synchronously with the relative movement of the vehicle.

EP-A2-0 302 964 discloses an automated system and method for washing automobiles, whereby the side contour of a vehicle is scanned by stationary vertical sensor means outside the washing area as the vehicle is driven into the washing area. The present invention is intended to eliminate the need for sensor means outside the washing area.

The object of the present invention is, with the above out-lined prior art as its starting point, to combine advantageous features from this in a new way so as to obtain a compact, user-friendly system, of relatively simple structure; and a special object of the invention is to provide a new method and a new system designed for the use of high pressure spraying, with the advantages that this brings about in terms of both environmental desirability and energy saving, as well as washing time and efficiency.

In connection with high pressure spraying, in order to achieve a satisfactory result it is important that the spraying is carried out in an optimal way. Important parameters here are distance, angle, beam overlapping (spraying pattern) and also, of course, water pressure, the amount of water used, and the quality and consistence of the chemicals used, and the time needed for them to take effect.

According to the invention, a method is therefore proposed having the features of claim 1.

Similarly, according to the invention, a device for washing vehicles is suggested as is disclosed in claim 2.

By means of the invention a compact system is achieved. The scan is made possible in a phase where dirt and water particles would not have a disturbing effect, and the individual high pressure nozzles used are guided into optimal positions in relation to the vehicle. Full utilization of the advantages provided by high pressure spraying is thus obtained. The washing time is also considerably reduced because the period of time in the system is put to best possible use. The new method and the new system will be environmentally friendly because of the high pressure spraying (reduced water consumption and external waste); furthermore there is a reduction in energy consumption.

The invention shall now be explained in more detail with reference to the diagrams, in which:
- Figure 1:: shows a top plan view of the car wash according to the invention
- Figure 2:: shows a side view of the device
- Figure 3:: shows an end view of the device
- Figure 4:: shows a side view as in figure 2, with the actual car wash or wash carriage in movement during a washing cycle, and
- Figure 5:: shows an end view of a somewhat modified car wash according to the invention.

The device has, in a known way, per se, a carriage or frame 1 which can be moved backwards and forwards in the longitudinal direction of the car 2 shown, said carriage running on rails 3, 4 in the floor 5.

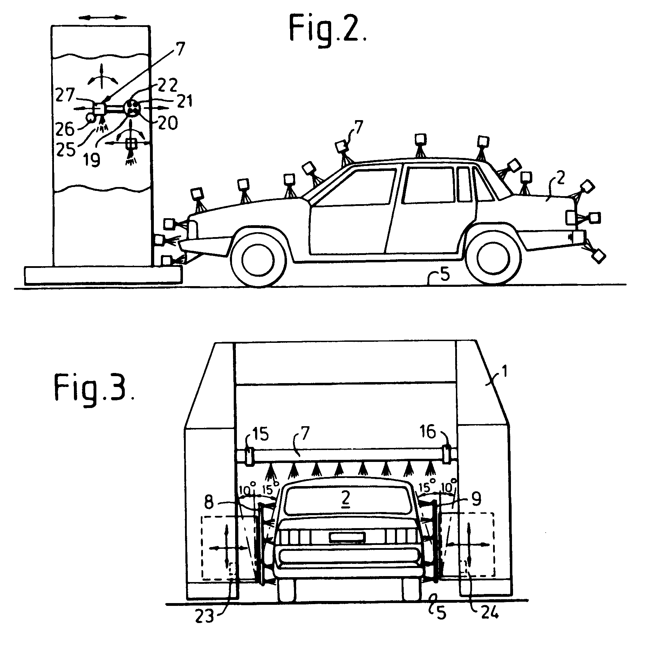

In the wash carriage 1 a horizontal spray bar 7 is provided. It is, as depicted in figure 2, mounted in the carriage in such a way that it can be raised and lowered, as well as rotated around its horizontal longitudinal axis, which is transverse to the longitudinal axis of the car. As a result of the movement possibilities, the spray bar 7 can assume desired positions relative to the car 2 when the carriage 1 is moved to the right in figure 2, and thereafter to the left and is thus guided past and over the vehicle. This is illustrated in figure 2 in that the spray bar 7 is drawn in relative to the vehicle 2, and that many of the possible positions which the spray bar assumes when the carriage 1 passes over the vehicle 2 are indicated.

For washing the sides of the vehicle, there are mounted in the wash carriage 1, two vertical spray bars, marked 8 and 9 respectively. These vertical spray bars 8, 9 are mounted in carriage 1 so that they can be moved towards and away from the sides of the vehicle, vertically up and down, and can be rotated around the horizontal centre axis. Further, the vertical spray bars 8, 9 can also be tipped or tilted towards and away from the respective side surfaces of the car, as is shown by means of the dotted lines and the indication of angles in figure 3.

The spray bar 7 also functions as a measuring bar, it being equipped with two brackets 15, 16 which each carry a measuring head 17, 18. Each measuring head has four photoelectric cells 19, 20, 21, 22. Said two measuring heads 17, 18 and their respective photoelectric cells 19, 20, 21 22 lie horizontally above one another and thus light beam go between them. These light beams works as sensors transverse to the longitudinal axis of the vehicle or car 2 the dimensions of which are to be sensed. When one or several light beam are broken, signals are provided which via suitable evaluation couplings are converted into control signals. These control signals are stored in an expedient fashion and are used for the control and positioning of the spray bar. In this connection, we are dealing with equipment which is known, per se, for a person who is skilled in the art. More detailed information about equipment of this kind can be found, inter alia, in DE 30 05 493 A1, and of interest in this connection is also the description which is given in DE 32 08 527 C2.

For measuring the side distances, ultrasonic equipment is used, here just indicated by the rectangular boxes 23, 24.

The spray bar 7 comprises a high pressure cable, which is not illustrated, having a plurality of nozzles 25. Moreover, a soap applicator pipe 26 is incorporated in said bar, and the spray bar 7 is also structurally combined with a dryer bar 27.

More details concerning the high pressure cable, soap applicator pipe and spray bar are not shown, as these are all known components, per se, for a person who is skilled in the art. Important in this connection is only that, in particular, the high pressure nozzles 25 and dryer bar 27 can be controlled and positioned by the use of data provided by the scan which is carried out by means of the photoelectric cell heads 17, 18.

The ultrasonic equipment 23, 24 is used for measuring the side distance and in addition provides information of any maladjustment in the position in the carriage. The signals provided in this way also are stored and used for controlling the respective vertical spray bars 8 and 9. Said vertical spray bars 8, 9 are mounted in the carriage so that they can be moved towards and away from the sides of the vehicle, vertically up and down, and can also be rotated about horizontal centre axes. Further, said vertical spray bars 8, 9 can also be tipped or tilted towards and away from the respective side surfaces of the vehicle as is shown by means of the dotted lines and the angles indicated in figure 3.

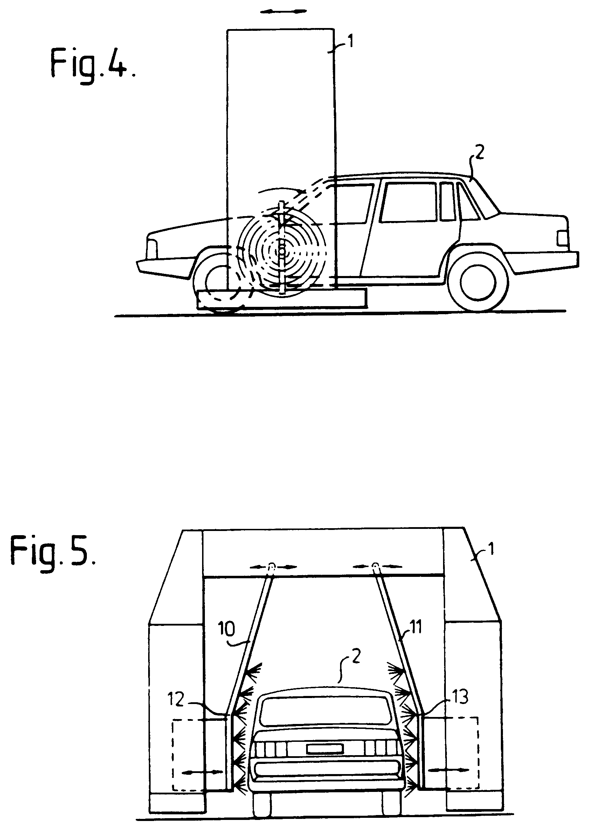

In figure 5, a second vertical spray bar assembly is shown. At each inner side of the carriage is arranged an optionally articulated vertical spray bar 10, 11. Each of these is mounted in the carriage in such a way that they can be moved in the transverse direction of the car, towards and away from the respective side surfaces of the car. The optional bar members 12, 13 make possible an adjustment to the transverse profile of the car, such as is shown in figure 5, but the bars 10, 11 can also be straight, that is like the bars 8, 9, only longer, i.e., with a greater reach in height.

The vertical spray bar assembly 10, 11 can be used instead of the vertical spray bar assembly 8, 9, but can also be optionally combined with this, i.e., that both vertical spray bar assemblies are in one and the same carriage 1. The vertical spray bars 8, 9 can then for instance be arranged at the side of the vertical spray bars 10, 11, or possibly arranged beneath them, as spray bars 10, 11 in figure 5 are raised somewhat higher than the position they are shown in in figure 5, so that underneath, i.e., above the low parts of the side of the car, there will be room for the rotating spray bars 8, 9. The particular form of the spray bar assembly is, of course, not of decisive significance in connection with the present invention and a person skilled in the art would stand relatively free with regard to suitable embodiments.

The purpose of the measuring equipment, i.e.,the photoelectric cell heads 17, 18 is to carry out a scan of the profile/contour of the car in the longitudinal direction, memorizing and evaulating/registering relevant profile measurements which are then used for controlling the bar assembly 7. By means of the ultrasonic equipment 23, 24, the side surfaces of the car are scanned, that is the distance, for control and positioning of the vertical spray bars.

Scanning is carried out with the vehicle stationary and the carriage in motion.

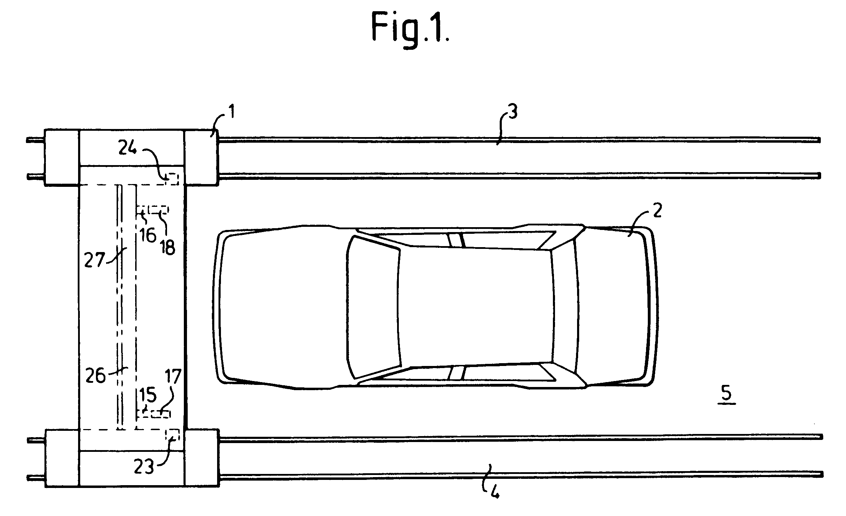

A washing cycle may be executed in the following way:
The carriage 1 is in the start position, on the left in figure 1. The vehicle 2 is moved into position, the position as shown in figure 1. The washing device, i.e., the wash carriage 1 is moved towards the right, past and over the vehicle 2. During this movement, one of the ultrasonic devices 23 is activated, so that a side distance measurement is taken. A reading of the length of the vehicle is carried out simultaneously. These measurements are stored.

Thereafter the carriage 1 moves back to the left in figure 1, i.e., to the start position as shown. During this movement, soap is applied by means of the soap applicator pipe 26.

The carriage 1 then moves to the right once more, past and over the car 2, and during this movement a reading of the side profile of the vehicle is taken by using the photoelectric cell heads 17, 18. An ultrasonic measurement of the other side of the vehicle is made at the same time by means of the ultrasonic device 24. These measurements are stored.

The reason that the sides of the vehicle 2 are each measured individually in a separate movement past the car is that possible reciprocal disturbances between the ultrasonic devices 23, 24 are thereby avoided.

The carriage 1 then goes to the left yet again and during this movement a positioning is carried out with side movements, i.e., the vertical spray bars 8, 9; 10, 11 are positioned at the side by using the side distance measurements.

The carriage 1 returns thereafter to the right. Now a spraying under high pressure of the sides of the car is carried out by using the vertical spray bars.

The carriage then goes back to the left and high pressure spraying is carried out by means of the bar 7 and the nozzles 25. During this spraying, the bar 7 and its nozzles 25 are controlled by using the measurements which were read off during the first reading of the side profile, and the nozzles are guided by this at the correct distance and angle relative to the vehicle, such as is indicated in figure 2, where the spray bar 7 is shown in several selected, typical working positions relative to the stationary vehicle 2.

The carriage 1 then moves back once more and rinsing is carried out with the addition of wax by using the spray bar.

The carriage goes back to the left yet again, and a so-called draining takes place.

Thereafter, the carriage goes back once more and rinsing with clean water takes place, with the possible addition of a decalcifying agent so as to thereby reduce the pH value. During the next movement of the carriage drying is carried out by using data, i.e., the bars are controlled by using the data that has been registered and stored.

The washing is now finished and a signal is given that the car may be driven out of the system.

## Claims

1. A method of automatically washing a vehicle in a washing area of a washing device,
- wherein the side contour of the vehicle is scanned without contact in order to provide measurements of said contour,
- said measurement provided by scanning being stored,
- the stored data being used for positioning and moving a rotatable horizontal spray bar in relation to the vehicle,
- thereby emitting high pressure sprays at a desired angle and distance relative to the vehicle surface,
**characterised in that**
- the vehicle (2) is moved into the washing area and remains stationary,
- whereafter a side distance, i.e. the distance between one side surface of the vehicle (2) and a fixed point in the adjacent side of the washing device, is measured,
- a reading of the length of the vehicle is carried out simultaneously and the measurement data are stored,
- **whereafter** a reading of the side profile is taken and at the same time a measurement of the other side distance is taken **without high pressure spraying,** these measurement data being stored,
- whereafter the vehicle (2) is sprayed by means of said horizontal bar (7) and vertical spraying bars (8,9) as controlled by use of said stored data.

2. An automatic vehicle washing device, comprising
- a carriage having a horizontal high pressure spray bar rotatable about a horizontal axis and
- means for **touchless** scanning the shape of the vehicle,
- means for storing said scanning data,
- means for using said stored data to move the horizontal spray bar (7) and rotate the horizontal spray bar about the horizontal axis to position and direct high pressure nozzles of the horizontal bar (7) at spray angles and distances to said vehicle contour,
**characterized**
- by said scanning means being integrated in the carriage, and
- by an ultrasonic distance measuring system (23, 24) for determining **separately** in time the respective distance between each side surface of the vehicle and a fixed point in the adjacent side of the automatic washing device for controlling and positioning vertical spray bars separately.

## Patentansprüche

1. Verfahren zum automatischen Waschen eines Fahrzeugs in einem Waschbereich einer Waschvorrichtung,
- wobei die Seitenkontur des Fahrzeugs zur Lieferung von Meßwerten der Kontur berührungsfrei abgetastet wird,
- der durch die Abtastung gelieferte Meßwert gespeichert wird, (und)
- die gespeicherten Daten zum Positionieren und Bewegen einer drehbaren, waagerechten Sprühschiene in Beziehung zum Fahrzeug benutzt werden,
- um damit Hochdruck-Sprühstrahlen unter einem gewünschten Winkel und in einem gewünschten Abstand relativ zur Fahrzeugoberfläche auszustoßen,
dadurch gekennzeichnet, daß
- das Fahrzeug (2) in den Waschbereich bewegt wird und (dort) stehenbleibt,
- worauf ein Seitenabstand, d.h. der Abstand zwischen einer Seitenfläche des Fahrzeugs (2) und einem Festpunkt an der benachbarten Seite der Waschvorrichtung, gemessen wird, (und)
- gleichzeitig ein Ablesen bzw. Abgreifen der Länge des Fahrzeugs vorgenommen wird und die Meßdaten gespeichert werden,
- wonach ein Ablesen bzw. Abgreifen des Seitenprofils und gleichzeitig eine Messung des anderen Seitenabstands stattfindet, ohne ein Hochdruck-Sprühstrahlen bzw. - Abspritzen vorzunehmen, (und) diese Meßdaten gespeichert werden,
wonach das Fahrzeug (2) mittels der horizontalen Schiene (7) und vertikaler Sprühschienen (8,9), gesteuert unter Heranziehung der gespeicherten Daten, abgespritzt wird.

2. Automatische Fahrzeugwaschvorrichtung, umfassend:
- einen Wagen mit einer waagerechten, um eine waagerechte Achse drehbaren Hochdruck-Sprühschiene und
- einer Einrichtung zum berührungslosen Abtasten der Fahrzeugform,
- Mittel zum Speichern der Abtastdaten,
- Mittel zur Heranziehung der gespeicherten Daten für das Bewegen der waagerechten Sprühschiene (7) und zum Drehen der waagerechten Sprühschiene um die waagerechte Achse, um Hochdruckdüsen der waagerechten Schiene (7) unter Sprühwinkeln und in Abständen zur Fahrzeugkontur zu positionieren und auszurichten,
gekennzeichnet
- durch eine Integrierung der Abtastenrichtung in den Wagen und
- durch ein Überschall-Abstandsmeßsystem (23,24) zum zeitmäßig getrennten Bestimmen des jeweiligen Abstands zwischen jeder Seitenfläche des Fahrzeugs und einem Festpunkt an der benachbarten Seite der automatischen Fahrzeugwaschvorrichtung zum getrennten Steuern und Positionieren von vertikalen Sprühschienen.

## Revendications

1. Procédé de lavage automatique d'un véhicule automobile dans une zone de lavage d'un dispositif de lavage,
- dans lequel on balaie le contour latéral du véhicule sans le toucher afin de fournir des mesures du contour,
- ces mesures fournies par le balayage étant mémorisées,
- les données mémorisées étant utilisées pour positionner et déplacer, par rapport au véhicule, une rampe de projection horizontale tournante,
- en émettant ainsi des jets à haute pression suivant un angle souhaité par rapport à la surface du véhicule et à distance souhaitée de cette surface,
- caractérisé en ce que
- on déplace le véhicule (2) dans la zone de lavage et on le laisse en position stationnaire,
- après quoi, on mesure une distance latérale, c'est-à-dire la distance entre une surface latérale du véhicule (2) et un point fixe du côté adjacent du dispositif de lavage;
- on effectue simultanément une lecture de la longueur du véhicule et on mémorise les données de mesure,
- puis on effectue une lecture du profil latéral et en même temps on mesure la distance de l'autre côté sans projection sous haute pression, ces mesures étant mémorisées;
- après quoi, on effectue une projection sur le véhicule (2) au moyen de la rampe (7) horizontale et de rampes (8, 9) de projection verticales commandées à l'aide des données mémorisées.

2. Dispositif de lavage automatique de véhicule automobile, comprenant
- un chariot ayant une rampe de projection horizontale sous haute pression qui peut tourner par rapport à un axe horizontal et
- des moyens destinés à balayer la forme du véhicule sans le toucher,
- des moyens destinés à mémoriser les données de balayage,
- des moyens destinés à utiliser les données mémorisées pour déplacer la rampe (7) de projection horizontale et à la faire tourner par rapport à l'axe horizontal pour mettre en position et diriger les buses à haute pression de la rampe (7) horizontale suivant des angles de projection donnés par rapport au contour du véhicule et à des distances données du véhicule,
caractérisé en ce que
- les moyens de balayage sont intégrés au chariot, et
- en ce qu'il est prévu un système (23, 24) de mesure de distance destiné à déterminer séparément dans le temps la distance respective entre chaque surface latérale du véhicule et un point fixe du côté adjacent du dispositif automatique de lavage pour commander et mettre en position séparément les rampes verticales de projection.
